Europäisches Patentamt

European Patent Office

Office européen des brevets

(19)

(11) Publication number : **0 620 630 A1**

# (12) EUROPEAN PATENT APPLICATION

(21) Application number : 94302179.0

(51) Int. Cl.⁵ : **H02H 9/02, H01F 5/08**

(22) Date of filing : 25.03.94

(30) Priority : 26.03.93 JP 68758/93
15.06.93 JP 144004/93
21.06.93 JP 149589/93
26.11.93 JP 297032/93

(43) Date of publication of application :
19.10.94 Bulletin 94/42

(84) Designated Contracting States :
CH DE FR GB LI SE

(71) Applicant : NGK INSULATORS, LTD.
2-56, Suda-cho, Mizuho-ku
Nagoya City Aichi Pref. (JP)

(72) Inventor : Yoshida, Shinji,
Gurandouru-Inuyama, 101-go
29-1, Aza-Santanda,
Ohaza-Inuyama
Inuyama-shi, Aichi-ken, 484 (JP)
Inventor : Motoyama, Shuichiro, NGK
Komaki-ryo
1058 Aza-Nakada,
Ohaza-Futaebori
Komaki-shi, aichi-ken, 485 (JP)
Inventor : Ohashi, Takashi
7, Nishihon-machi 1-chome
Kasugai-shi, Aichi-ken, 486 (JP)

(74) Representative : Paget, Hugh Charles Edward
et al
MEWBURN ELLIS
York House
23 Kingsway
London WC2B 6HP (GB)

(54) **Superconducting fault current limiter.**

(57)  A superconducting fault current limiter having a cylindrical superconductive body 1 made of a ceramic high-temperature superconducting material and an induction coil 8 arranged in surrounding relationship with the superconductive body and connected in series with an electric power transport line . A cylindrical cooling container is arranged to contain only the superconductive body, the cooling container being filled with cooling liquid to immerse the superconductive body therein, and induction coil is wound around the cooling container. A core 9 is within the inner wall of the container 2.

EP 0 620 630 A1

The present invention relates to a superconducting fault current limiter, more particularly to a fault current limiter utilizing the superconductivity of a ceramic high-temperature superconductor the superconducting state of which is switched to a resistive state when a fault current beyond a critical value

In recent years, there has been proposed an inductive current limiter for protection of a circuit breaker, a transformer in power networks from fault currents caused by a short-circuit or thunderbolt. When applied with fault currents, the inductive current limiter provides a high impedance which limits the fault currents to restrain an electric load acting on the circuit breaker and transformer below a threshold level. In U.S. Patent No. 5,140,290 there is disclosed a high power inductive current limiter of this kind which is composed of an induction coil with at least one winding through which current flows, a cylindrical body made of a ceramic high-temperature superconducting material concentrically arranged within the induction coil, and a core made of a soft magnetic material of high permeability and concentrically disposed within the cylindrical body. In normal operation, the superconductivity of the cylindrical body shields the magnetic field of the induction coil completely from the core (Meissner effect), and impedance of the induction coil is maintained at a very low level to minimize loss of the electric power. When a fault current flows through the induction coil due to a short-circuit or thunderbolt, the superconductivity of the cylindrical body disappears and the impedance of the induction coil reaches its maximum, current-limiting value.

To maintain the superconductivity of the cylindrical body in normal operation, the inductive current limiter is immersed in cooling liquid such as liquid nitrogen. Since the conventional fault current limiter is entirely immersed in the cooling liquid to cool the superconductive body, the cooling device becomes large in size. In actual use of the fault current limiter, the induction coil is heated by its self-resistance when applied with transport current, and the iron core is also heated by the flow of eddy current caused by a magnetic field acting thereon after transition to the resistive state. As a result, the cooling liquid is heated by heat generation of the induction coil and iron core, resulting in a decrease of the cooling efficiency of the cooling liquid. In case the cooling liquid vapors on the boil due to the heat generation, there will occur an excessive increase in volume of the cooling liquid. resulting rapid increase of the internal pressure of the cooling device. To avoid such a problem, it is required to provide a pressure release mechanism on the cooling device. This results in a complicated construction of the cooling device and an increase of the manufacturing cost.

Additionally, the self-resistance of the iron core becomes small when the iron core is cooled. This causes an increase of the eddy current in the iron core after transition to the resistive state. Thus, the magnetic field in the iron core is reduced by the eddy current, and the relative permeability of the iron core becomes small. Accordingly, the iron core does not serve to increase the self-conductance of the induction coil after transition to the resistive state.

It is, therefore, required in commercial applications of the fault current limiter to enhance the cooling performance of the cooling device without causing a decrease of the relative permeability of the iron core, and it is also required to provide the cooling device in a small size at a low cost.

In the conventional fault current limiter, the cooling liquid is consumed by vaporization caused by heat generation of the induction coil and iron core, and the insulating proof of the cooling liquid is decreased due to bubbles caused by vaporization of the cooling liquid. It is, therefore, required to reduce replenishment amount of the cooling liquid without causing a decrease of insulating proof of the cooling liquid.

Furthermore, the superconductive body is greatly affected by eddy current losses in the iron core and joule losses caused by the resistance of the induction coil since it is disposed between the iron core and the inductive coil, resulting in a decrease of the critical current value of the fault current limiter. This causes fluctuation or decrease of the critical current value of the fault current limiter. In addition, the superconductive body of the conventional fault current limiter is applied with a mechanical stress from the exterior. It is, therefore, required to avoid fluctuation or decrease of the critical current value of the fault current limiter caused by joule heat of the induction coil, and it is also required to avoid the mechanical stress acting on the superconductive body.

A primary object of the present invention is to provide an improved fault current limiter capable of satisfying at least partly the requirements described above.

According to the present invention, there is provided a superconducting fault current limiter having a cylindrical superconductive body made of a ceramic high-temperature superconducting material and an induction coil arranged in surrounding relationship with the superconductive body for connection in series with an electric power transport line, wherein a cylindrical cooling container is arranged to contain only the superconductive body therein, the cooling container being filled with cooling liquid to immerse the superconductive body therein, and wherein the induction coil is wound around the cooling container. In a practical embodiment of the present invention, it is preferable that the cooling container is ar ranged in surrounding relationship with a core made of a soft magnetic material.

According to an aspect of the present invention, an impedance element such as a resistor, a condenser or a coil is connected in parallel with the induction coil to restrain the flow of current passing through the induction coil in the occurrence of a short-circuit or thunderbolt.

According to another aspect of the present invention, the core is made of a high resistance magnetic material and carried by a support structure forming a closed magnetic circuit.

According to a further aspect of the present invention, the superconducting fault current limiter further includes a condenser connected in parallel with the induction coil, detection means connected to the induction coil to produce an electric signal therefrom when detected the fact that the superconductive body has been switched from a superconducting state to a resistive state, and means responsive to the electric signal from the detection means for maintaining the superconductive body in the resistive state.

For a better understanding of the present invention, and to show how the same may be carried into effect, reference will now be made, by way of example, to the accompanying drawings, in which:-

Fig. 1 is a partly broken perspective view of a superconducting fault current limiter in accordance with the present invention;

Fig. 2 is a sectional view of the fault current limiter shown in Fig. 1;

Fig. 3 is a table showing a consumption amount of liquid nitrogen in a cooling container shown in Fig. 1 in contrast with a conventional fault current limiter;

Fig. 4 is a perspective view of another embodiment of a superconducting fault current limiter in accordance with the present invention;

Fig. 5 is a diagram of a test circuit for the fault current limiter shown in Fig. 4;

Fig. 6 is a diagram of a further embodiment of a superconducting fault current limiter in accordance with the present invention;

Fig. 7 is a sectional view of the fault current limiter shown in Fig. 6;

Fig. 8 is a diagram of an application of the fault current limiter shown in Fig. 6;

Fig. 9 is a sectional view of a modification of the fault current limiter shown in Fig. 4; and

Fig. 10 is a diagram of a test circuit for the modified fault current limiter shown in Fig. 9.

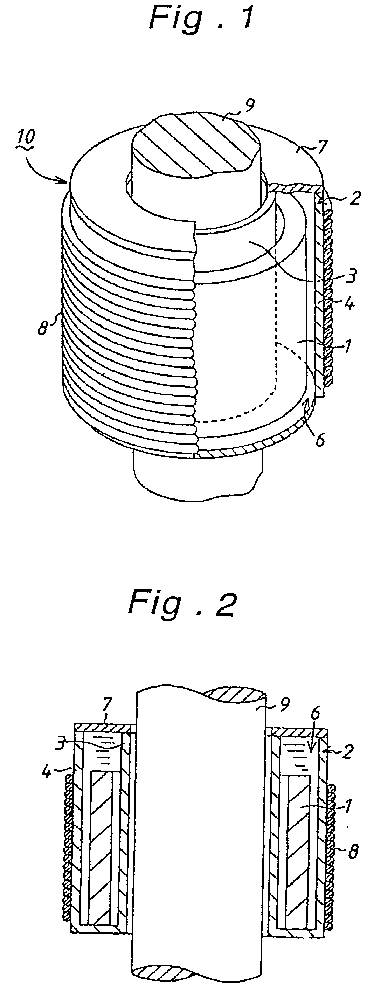

Referring now to the drawings, wherein like reference numerals designate identical or corresponding parts throughout the several views. In Figs. 1 and 2, there is illustrated a superconducting fault current limiter 10 which includes a cylindrical superconductive body 1 contained in a double walled cylindrical cooling container 2 and an induction coil 8 wound around the cooling container 2. The cylindrical superconductive body 1 is made of a ceramic high-temperature superconducting material such as bismuth type superconducting substance and dimensioned to have an inside diameter of 40mm, an outside diameter of 50mm and a length of 50mm. The material of superconductive body 1 was selected from the group consisting of Bi-Sr-Ca-Cu-O, where particles of $Bi_2O_3$, $CuO$, $SrCO_3$ were prepared by a mixing ratio of Bi:Sr:Ca:Cu = 2:2:1:2. The critical temperature of superconductive body 1 was determined to be more than 77K, and the critical current density (Jc) of the same was determined to be $1000A/cm^2$ in a critical magnetic field (Bc) of 50 gauss.

The double walled cylindrical cooling container 2 is arranged in surrounding relationship with a core 9 made of soft magnetic material such as soft iron. The cooling container 2 has an internal cylindrical wall 3 surrounded by an external cylindrical wall 4 formed integrally therewith at its one end to form an annular cavity 6. The annular cavity 6 is closed by an annular end plate 7 secured to opening ends of the cylindrical walls 3, 4 and is filled with liquid nitrogen. The cooling container 2 is made of stainless metal or titanium alloy and is provided with inlet and outlet ports through which the liquid nitrogen is supplied into the annular cavity 6 and discharged therefrom. The cylindrical superconductive body 1 is entirely immersed in the liquid nitrogen stored in the annular cavity 6 of container 2. The induction coil 8 is in the form of an enamel winding wound around the cylindrical container 2 with 200 turns in one layer and is connected in series with an electric power transport line (not shown).

When applied with rated current in normal operation, the cylindrical superconductive body 1 is maintained in the superconducting state and shields the magnetic field of the induction coil 8 completely from the iron core 9. Thus, the inductance of coil 8 is maintained very low to permit the flow of current passing therethrough without any limitation. When the induction coil 8 is applied with a fault current in the occurrence of a short-circuit or thunder-bolt, the superconductive body 1 turns resistive from the superconducting state to provide a high impedance which limits the fault current.

In application of the cooling container 2 to the fault current limiter 10, only the superconductive body 1 is immersed in the liquid nitrogen filled in the cooling container 2, while the iron core 9 and induction coil 8 are exposed to the atmospheric air. Accordingly, the cooling container 2 can be formed in a small size, and the amount of liquid nitrogen can be reduced. Since the liquid nitrogen is not directly affected by heat generation of the induction coil 8 in normal operation, the cooling efficiency of the fault current limiter 10 can be enhanced at a low cost. Furthermore, the cooling container 2 can be adapted to the fault current limiter 10 without providing any pressure release mechanism since the heat generation of the induction coil 8 does not vaporize the liquid nitrogen. This is useful to simplify the construction of the cooling container 2. In addition, the relative permeability of the iron core 9 is maintained without any influence caused by the liquid nitrogen to provide sufficient current limiting effects after transition to the resistive state. In this embodiment, it has been confirmed that the relative permeability of the iron core is maintained in a value of about 5.0 after transition to the resistive state.

Since in this embodiment the liquid nitrogen does not act to cool the iron core 9, there will not occur any decrease of the resistance of the iron core. This results in a decrease of the eddy current flowing through the iron core after transition to the resistive state. Accordingly, the offset action of the eddy current to the magnetic flux in the iron core becomes small, and the relative permeability of the iron core becomes large in contrast with that in the conventional fault current limiter. Thus, the provision of the iron core is effective to increase the self-inductance of the induction coil 8 after transition to the resistive state so as to enhance the current limiting ability of the fault current limiter.

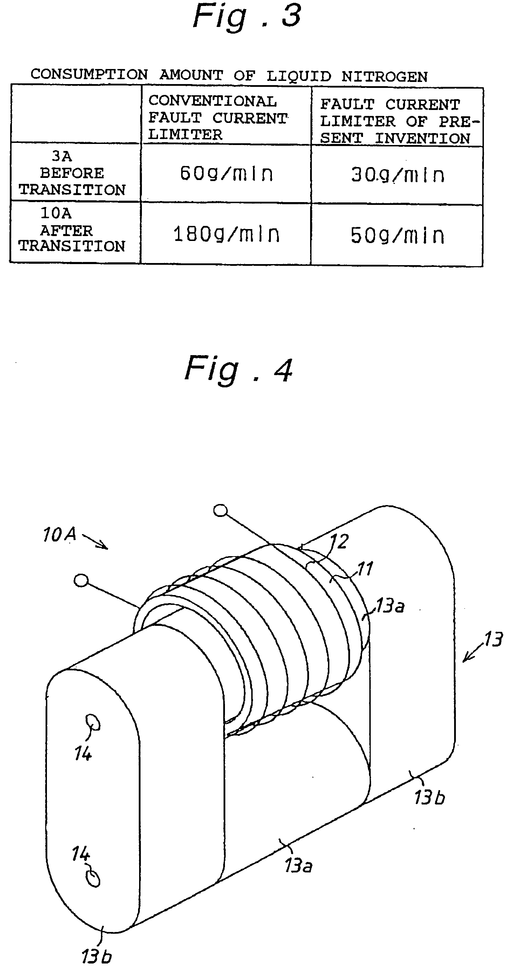

In a table of Fig. 3, a consumption amount or vaporized amount of the liquid nitrogen before and after transition to the resistive state of the fault current limiter 10 are listed in contrast with those in the conventional fault current limiter. In this measurement. the transition or critical current value from the superconducting state to a resistive state has been determined to be 7 A. When current of 3 A flows through the induction coil 8, both the current limiters are maintained in the superconducting state, respectively. When current of 10 A flows through the induction coil 8, both the fault current limiters are switched over from the superconducting state to a high impedance condition. As shown in the table of Fig. 3, the consumption amount of liquid nitrogen in the conventional current limiter was 60g/min before transition to the resistive state and 180 g/min after transition to the resistive state. In contrast with the conventional fault current limiter, the consumption amount of liquid nitrogen in the fault current limiter 10 of the present invention was 30 g/min before transition to the resistive state and 50 g/min after transition to the resistive state. As is understood from the above measurement results, the consumption amount of the liquid nitrogen in the fault current limiter 10 of the present invention is greatly reduced. This is useful to greatly reduce the arrangement cost of the fault current limiter.

In Fig. 4 there is illustrated another embodiment of the present invention, wherein a superconducting fault current limiter 10A is designed to reduce replenishment amount of cooling liquid without causing a decrease of insulating proof of the cooling liquid. The fault current limiter 10A has a core structure 13 composed of a pair of vertically spaced solid columnar bodies 13a, 13a and a pair of spaced solid support bodies 13b, 13b which are made of soft magnetic material such as soft iron. The columnar bodies 13a each are dimensioned to be 38mm in diameter and 60mm in length and detachably connected to the respective support bodies 13b by means of screws 14, 14 to provide a closed magnetic circuit. The fault current limiter 10A includes a cylindrical superconductive body 11 arranged in surrounding relationship with the iron core in the form of the upper columnar body 13a and an induction coil 12 arranged in surrounding relationship with the superconductive body 11. The cylindrical superconductive body 11 is made of the same material and formed in the same size as that of the superconductive body 1 shown in Fig. 1. The induction coil 12 is in the form of an enamel winding wound around the columnar body 13a with 200 turns in one layer and connected in series with an electric power transport line (not shown).

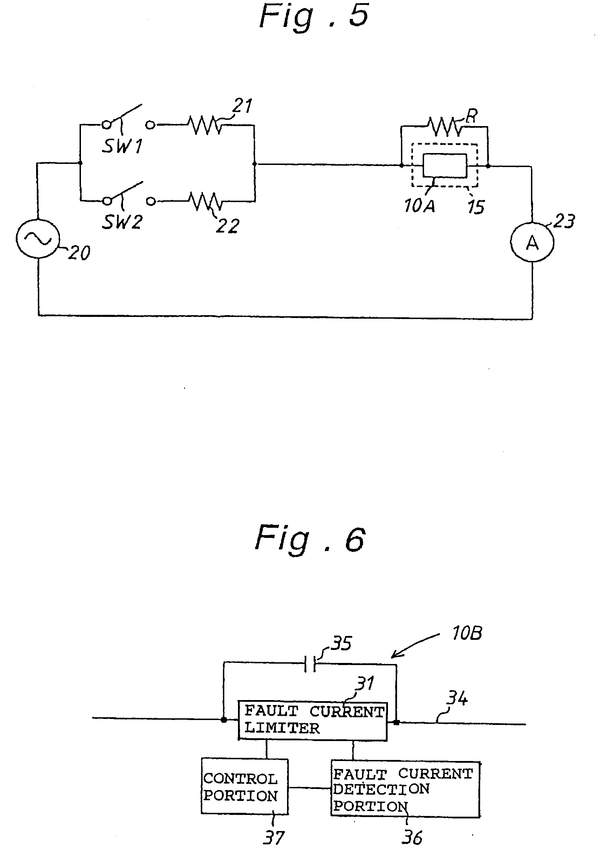

In Fig. 5 there is illustrated a test circuit which is designed to reduce heat generation caused by the resistance of the induction coil 12 and eddy current losses in the iron core 13a. The test circuit includes the fault current limiter 10A immersed in liquid nitrogen in a cooling container 15, an impedance element in the form of a resistor R located outside the cooling container 15 and connected in parallel with the induction coil 12 of fault current limiter 10A, a first switch SW1 having a fixed contact connected in series with the induction coil 12 through a resistor 21 of $12\Omega$ and a movable contact connected in series with a power source 20 of alternating current of 60Hz. a second switch SW2 having a fixed contact connected in series with the induction coil 12 through a resistor 22 of $2\Omega$ and a movable contact connected in series with the power source 20, and an ammeter 23 disposed between the power source 20 and the induction coil 12 of the fault current limiter 10A. In addition, the first switch SW1 is arranged to be closed in normal operation, while the second switch SW2 is arranged to be opened in the normal operation and to be closed in the occurrence of a short-circuit or thunderbolt.

For simulation tests of the fault current limiter 10A, the resistance value of resistor R was changed to measure the current flowing through the test circuit and to measure the replenishment amount of liquid nitrogen into the cooling container 15. The measurement results are listed on the following table 1, wherein the replenishment amount of liquid nitrogen is represented as 100% in the case that the resistor R was removed from the test circuit.

Table 1

| Test No. | Resistor ($\Omega$) | R/2$\pi$fL | SW1 Normal (A) | SW2 Fault (A) | Replenish. Amount (%) |
|----------|---------------------|------------|----------------|---------------|------------------------|
| 1 | 0.5 | 0.34 | 3.6 | 19.2 | 14 |
| 2 | 1.0 | 0.69 | 3.6 | 17.5 | 30 |
| 3 | 2.0 | 1.38 | 3.6 | 16.0 | 50 |
| 4 | 3.0 | 2.10 | 3.6 | 15.3 | 63 |
| 5 | 4.0 | 2.76 | 3.6 | 14.6 | 68 |
| 6 | 5.0 | 3.45 | 3.6 | 14.3 | 72 |
| 7 | Non | -- | 3.6 | 13.0 | 100 |
| 8 | Non | -- | 3.6 | 22.0 | -- |

In the Table 1, the character R is the resistance value of resistor R, the character f is the frequency of the alternating current of power source 20, and the character L is the inductance of the induction coil 12. In the simulation tests, the following facts have been confirmed. In the case that the fault current limiter 10A and the resistor R were removed, the current flowing through the test circuit was maintained at a constant value (3.6 A) during normal operation and increased up to 22.0 A in the occurrence of a short-circuit. (see Test No. 8) In the case that the resistor R was removed, the current flowing through the test circuit was maintained at the constant value (3.6 A) during normal operation and increased up to 13.0 A in the occurrence of a short-circuit. (see Test No. 7) From these facts, it has been found that the fault current limiter 10A acts to restrain current of 9A in the occurrence of the short-circuit. When the resistance value of resistor R was decreased, the current limiting effect of the fault current limiter 10A become small, while the replenishment amount of liquid nitrogen become small. This was caused by an increase of shunt current to the resistor R and a decrease of the current flowing through the induction coil of fault current limiter 10A.

From the foregoing measurement results, it will be understood that the resistor R connected in parallel with the induction coil 12 is effective to reduce heat generation caused by eddy current losses in the iron core 13a and the resistance of induction coil 12. Accordingly, it is preferable that the resistance value of resistor R is determined taking into consideration with the function of the fault current limiter 10A and the replenishment amount of liquid nitrogen. In the test circuit, it is desirable that the resistance value of resistor R is determined to R/2$\pi$fL$\leqq$3.

In actual practices of the present invention, the resistor R in the test circuit may be replaced with a condenser C or a coil $L_2$. The following tables 2 and 3 show measurement results where the capacitance of condenser C or the inductance of coil $L_2$ was changed to measure the current flowing through the test circuit and to measure the replenishment amount of liquid nitrogen.

Table 2

| Test No. | Resistor ($\Omega$) | $\dfrac{1}{2\pi fC/2\pi fl}$ | SW1 Normal (A) | SW2 Fault (A) | Replenish. Amount (%) |
|----------|---------------------|------------------------------|----------------|---------------|------------------------|
| 9 | 2000 | 0.88 | 3.6 | 17.2 | 42 |
| 10 | 1000 | 1.77 | 3.6 | 15.5 | 60 |
| 11 | 500 | 3.53 | 3.6 | 14.0 | 75 |

## Table 3

| Test No. | Condenser ($\mu$F) | $\dfrac{2\pi f L_2}{2\pi f L_1}$ | SW1 Normal (A) | SW2 Fault (A) | Replenish. Amount (%) |
|---|---|---|---|---|---|
| 12 | 3 | 0.75 | 3.6 | 17.4 | 35 |
| 13 | 5 | 1.25 | 3.6 | 16.5 | 47 |
| 14 | 10 | 2.50 | 3.6 | 14.9 | 68 |

In the table 3, the character $L_1$ is the inductance of the fault current limiter 10, and the character $L_2$ is the inductance of the coil connected in parallel with the induction coil 12 of fault current limiter 10A.

Additionally, it has been found in the simulation tests that heat generation caused by eddy current in the core can be decreased by replacement of the iron core with a core made of a high resistance magnetic material such as ferrite.

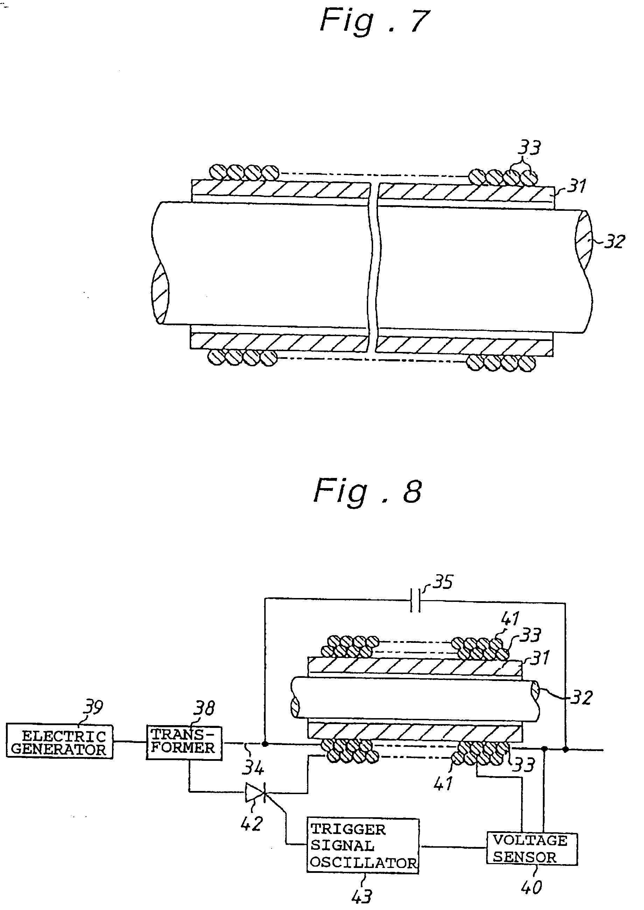

In Figs. 6 and 7 there is illustrated a further embodiment of the present invention, wherein a superconducting fault current limiter 10B is designed to reduce service losses of transport current in normal operation and to avoid delay of operation in the occurrence of a short-circuit or thunderbolt. The fault current limiter 10B includes a cylindrical superconductive body 31 arranged in surrounding relationship with a ferrite core 32 and an induction coil 33 wound around the superconductive body 31 and connected in series with an electric power transport line 34. The fault current limiter 10B further includes a condenser 35 connected in parallel with the induction coil 33 to provide a parallel resonance circuit for increasing the impedance of induction coil 33, a fault current detection portion 36 connected to the induction coil 33 to detect the fact that the superconductive body 31 has been switched to a resistive state from a superconducting state and a control portion 37 connected to the fault current detection portion 36 to maintain the superconductive body 31 in the resistive state when applied with an input signal from the fault current detection portion 36.

Assuming that the power transport line 34 is connected to an electric generator 39 through a transformer 38 as shown in Fig. 8. the fault current detection portion 36 is arranged in the form of a voltage sensor 40 connected to the induction coil 33 to detect voltage of the induction coil 33, and the control portion 37 is composed of a trigger signal oscillator 43 connected at its input terminal to the voltage sensor 40, an ancillary coil 41 wound around the induction coil 33 and a thyristor 42 connected at its anode to the transformer 38 and at its cathode to the ancillary coil 41. In operation, the trigger signal oscillator 43 produces a trigger signal therefrom in response to an input signal from the voltage sensor 40, and in turn. the thyristor 42 is turned on in response to the trigger signal to energize the ancillary coil 41.

In normal operation, the fault current limiter 10B is maintained in a superconducting state to permit the flow of transport current passing through the induction coil 33 without causing any service losses. In the occurrence of a short-circuit or thunderbolt, the superconductive body 31 turns resistive to increase the impedance of induction coil 41. In this instance, the condenser 35 resonates with the induction coil 33 at a frequency of the transport current to maximize the impedance of induction coil 33 to completely block a fault current applied to the current transport line 34. When the resistive state of the superconductive body 31 is detected by the voltage sensor 40, the trigger signal oscillator 43 produces a trigger signal in response to an input signal from the voltage sensor 40 and applies it to the thyristor 42. In turn, the thyristor 42 is turned on to energize the ancillary coil 41. Thus, a magnetic field in excess of the critical magnetic field is generated to maintain the superconductive body 31 in the resistive state. This is effective to rapidly switch over the superconductive body 31 to the resistive state to avoid delay of operation of the fault current limiter 10B.

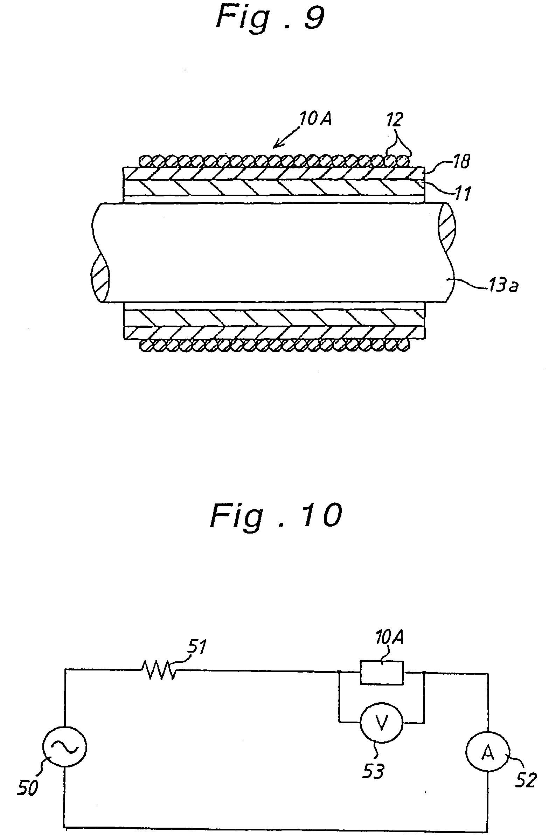

In Fig. 9 there is illustrated a modification of the fault current limiter 10A shown in Fig. 4, wherein a cylindrical sleeve 18 made of heat insulating material such as synthetic resin, fiber reinforced plastic or fiber glass is disposed between the cylindrical superconductive body 11 and the induction coil 12. The cylindrical heat insulating sleeve 18 is effective to block joule heat of the induction coil 12 applied to the superconductive body 11 thereby to avoid fluctuation or decrease of the critical current value of the fault current limiter 10A. The cylindrical heat insulating sleeve 18 is useful to ensure the mechanical strength of the superconductive body 11 and to prevent oscillation of the fault current limiter 10A caused by an impact acting thereon in normal operation.

In Fig. 10 there is illustrated a test circuit of the fault current limiter 10A provided with the cylindrical heat insulating sleeve 18. In the test circuit of Fig. 10, the induction coil 12 of the fault current limiter 10A is connected in series with a power source 50 of alternating current through a resistor 51 at its one end and connected in series with an ammeter 52 at its other end, and a voltmeter 53 is connected in parallel with the induction coil 12 of fault current limiter 10A. For simulation tests of the fault current limiter 10A, the voltage of the power source 50 was adjusted to supply a constant current of 3 A to the fault current limiter 10A for fifteen (15) minutes and increased at a constant speed to measure the critical current value of the superconductive body 11. The measurement results are listed in the following table 4.

Table 4

| Test No. | Outer Diameter of Sleeve (mm) | Thickness of Sleeve (mm) | Current Value (A) | Current Value Ratio |
|---|---|---|---|---|
| 1 | 55 | 3 | 8.8 | 117 |
| 2 | 60 | 8 | 9.7 | 129 |
| 3 | 65 | 13 | 10.5 | 140 |
| 4 | 70 | 18 | 11.0 | 147 |
| 5 | Non | Non | 7.5 | 100 |

From the measurement results, it has been confirmed that the critical current value of the superconductive body 11 is increased by the provision of the cylindrical heat insulating sleeve 18.

Within the invention, the superconductive body and the container may be of shape other than cylindrical and the container may contain components in addition to the superconductive body. Thus it may be stated that according to the invention the superconductive body forms a magnetic shield and is housed in the container, with the coil and the core outside the container walls.

## Claims

1. A superconducting fault current limiter having a cylindrical superconductive body made of a ceramic high-temperature superconducting material and an induction coil arranged in surrounding relationship with said superconductive body and connected in series with an electric power transport line, wherein a cylindrical cooling container is arranged to contain only said superconductive body therein, said cooling container being filled with cooling liquid to immerse said superconductive body therein, and wherein said induction coil is wound around said cooling container.

2. A superconducting fault current limiter as claimed in Claim 1, wherein said cooling container is arranged in surrounding relationship with a core made of a soft magnetic material.

3. A superconducting fault current limiter as claimed in Claim 1, wherein an impedance element is connected in parallel with said induction coil to restrain the flow of current passing through said induction coil in the occurrence of a short-circuit or thunderbolt.

4. A superconducting fault current limiter as claimed in Claim 3, wherein said impedance element is either one of a resistor, a condenser and a coil.

5. A superconducting fault current limiter as claimed in Claim 1, wherein a core made of a high resistance magnetic material and carried by a support structure forming a closed magnetic circuit is provided.

6. A superconducting fault current limiter as claimed in Claim 1. further comprising a condenser connected in parallel with said induction coil, detection means connected to said induction coil to produce an electric signal therefrom when detected the fact that said superconductive body has been switched over from a superconducting state to a resistive state, and control means responsive to the electric signal from said detection means for maintaining said superconductive body in the resistive state.

7. A superconducting fault current limiter as claimed in Claim 6. wherein said detection means comprises a voltage sensor connected to said induction coil to produce an electric signal therefrom when detected a critical voltage appearing at said induction coil, and wherein said control means comprises an ancillary coil wound around said induction coil, a trigger signal oscillator connected to said voltage sensor to apply a trigger signal to said ancillary coil when applied with the electric signal from said voltage sensor.

8. A superconducting fault current limiter having a cylindrical superconductive body made of a ceramic high-temperature superconducting material and an induction coil arranged in surrounding relationship with said superconductive body and connected in series with an electric power transport line, wherein a heat insulating material is disposed between said cylindrical superconductive body and said induction coil.

# Fig . 1

# Fig . 2

# Fig . 3

CONSUMPTION AMOUNT OF LIQUID NITROGEN

| | CONVENTIONAL FAULT CURRENT LIMITER | FAULT CURRENT LIMITER OF PRE- SENT INVENTION |
|---|---|---|
| 3A BEFORE TRANSITION | 60g/min | 30.g/min |
| 10A AFTER TRANSITION | 180g/min | 50g/min |

# Fig . 4

# Fig . 5

# Fig . 6

# Fig . 7

# Fig . 8

## Fig . 9

## Fig . 10

EP 0 620 630 A1

**European Patent Office**

**EUROPEAN SEARCH REPORT**

Application Number
EP 94 30 2179

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | FR-A-2 666 912 (GEC ALSTHOM) * page 4, line 31 – page 5, line 17 * | 1,2 | H02H9/02 H01F5/08 |
| Y | | 8 | |
| Y | US-A-3 443 255 (SIEMENS) * column 3, line 14 – line 42 * | 8 | |
| A | FR-A-2 661 288 (GEC ALSTHOM) * page 6, line 32 – page 7, line 6 * | 3,4 | |
| A | WO-A-90 02407 (LICENTIA) * page 8 * | 5 | |
| A | FR-A-2 181 218 (COMPAGNIE GÉNÉRALE D'ÉLECTRICITÉ) * page 2, line 24 – line 37 * | 6,7 | |
| A | US-A-4 894 360 (THE U.S. OF AMERICA AS REPRESENTED BY THE SECRETARY OF THE ARMY) | | |
| A | FR-A-2 677 503 (THE TOKYO ELECTRIC POWER COMPANY) | | TECHNICAL FIELDS SEARCHED (Int.Cl.5) |
| A,D | EP-A-0 353 449 (ASEA BROWN BOVERI) | | H01F H02H |

The present search report has been drawn up for all claims

| Place of search | Date of completion of the search | Examiner |
|---|---|---|
| THE HAGUE | 4 August 1994 | Vanhulle, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document